# EUROPÄISCHE PATENTANMELDUNG

(11) **EP 1 643 150 A1**
(43) Veröffentlichungstag der Anmeldung: **05.04.2006**
(21) Anmeldenummer: 05019742.5
(22) Anmeldetag: 10.09.2005
(51) Int. Cl.: F16D 63/00

(54) **Haltevorrichtung**

(30) Priorität: 30.09.2004 DE 102004047500
(71) Anmelder: Bosch Rexroth AG, 70184 Stuttgart (DE)
(72) Erfinder: Kunkel, Helmut, 67859 Wiesthal (DE); Wirthmann, Anton, 97737 Gemünden (DE)

(57) **Zusammenfassung**

Haltevorrichtung, umfassend ein elektrisch gesteuertes Halteelement 9 und eine Welle 1 mit Kupplung 2, die mit dem Halteelement 9 interagierf und bei der eine möglichst kompakte Gesamtausführung inklusive einer einfachen Montage gewährleistet sein soll, wobei das Halteelement 9 vorzugsweise koaxial zur Welle 1 angeordnet ist und die Kupplung 2 koaxial zur Welle angeordnet ist und das Halteelement 9 zumindest zwei Positionen einnehmen kann, wobei eine Position die Welle 1 freigibt und eine Position die Welle 1 arretiert und weiterhin das Halteelement 9 und die Kuppelung 2 eine korrespondierende Oberflächenstruktur umfasst.

## Beschreibung

Die Erfindung befasst sich mit der Arretierung beweglicher Achsen mittels einer Haltevorrichtung gemäß dem Oberbegriff des Anspruches 1 sowie mit einem Verfahren zur Ausführung eines Arretierungsvorganges. Des weiteren werden Vorrichtungen mit einbezogen, welche sich der erfindungsgemäßen Haltevorrichtung bedienen.

Bewegliche Achsen müssen je nach Anwendungsfall arretierbar sein. Ein mittels Elektromotor und Seilwinde realisierter Lastenkran beispielsweise muss bei Ausfall des Motors die Welle - welche die Seilwinde führt - blockieren, um ein Aufschlagen der Last am Boden zu vermeiden.

Die Patentschrift DE 39 42 344 C1 zeigt eine Drehrichtungssperre für einen Synchronmotor. Hier wird mittels Zähnen eine Bewegung der Rotorwelle bei Bedarf vermieden.

Die deutsche Offenlegungsschrift 26 01 558, welche alle Merkmale des Oberbegriffes der vorliegenden Erfindung enthält, stellt den nächstkommenden Stand der Technik dar. Die gezeigte Bremsvorrichtung ist gedacht für Elektromotoren und arbeitet mit einer an der Motorwelle befestigen Nockenscheibe mit einem oder mehreren Nocken, welche mittels eines elektromagnetisch betätigten Hebels blockiert werden kann. Das hier gezeigte Prinzip ist nur für Elektromotoren mit kleiner Leistung ausgelegt und lässt aufgrund der Ausgestaltung der Arretierungsvornchtung keine sehr feinstufige Arretierung zu.

Es ist die Aufgabe der vorliegenden Erfindung eine Haltevorrichtung zu realisieren, welche eine Arretierung von Achsen mit geringem Spiel erlaubt, wobei eine möglichst kompakte Gesamtausführung inklusive einer einfachen Montage gewährleistet sein soll. Weiterhin soll ein Verfahren gefunden werden, welches einen gesicherten Betrieb der Haltevorrichtung gewährleistet.

Die Erfindung löst diese Aufgabe dadurch, dass eine mit einer Welle interagierende Haltevorrichtung mit einem Halteelement verwendet wird, wobei das Halteelement vorzugsweise koaxial zur Welle angeordnet ist und mindestens zwei Positionen einnehmen kann, so dass eine Position die Welle freigibt und eine Position die Welle arretiert. Das Halteelement und die koaxial zur Welle angeordnete Kupplung umfasst eine kontaktseitige, korrespondierende Oberflächenstruktur, welche bei' Kontakt die Position der Welle hält.

Das Kuppelelement an der Welle soll eine kraftschlüssige oder formschlüssige Verbindung zwischen dem Halteelement und der Welle gewährleisten, so dass die Welle abhängig von der axialen Position des Halteelementes mit geringem Spiel fixierbar wird. Die geforderte und möglichst spielfreie Arretierung wird dadurch gewährleistet, dass die Kupplung koaxial zur Welle angeordnet ist und damit entlang des Wellenumfangs die Oberflächenstruktur nahtlos bzw. annähernd nahtlos vorhanden sein kann, was ein Eingreifen des Halteelementes nahezu unabhängig von der momentanen Position der Welle ermöglicht. Die Größe des Winkelversatzes bei eingerasteter Arretierung ist im Wesentlichen von der Art und der Feinheit der Oberflächenstruktur abhängig. Eine auf Reibung ausgelegte Oberflächenstruktur, ähnlich der von Sandpapier, hat eine feinere Auflösung als eine auf einer Verzahnung beruhende Oberflächenstruktur. Beide Versionen sind applikationsabhängig möglich, wobei einer Verzahnung aufgrund der höheren Stabilität und des geringeren Verschleißes der Vorrang zu gewähren ist.

Der geforderten Kompaktheit der Vorrichtung wird die Erfindung wegen der vorzugsweise koaxialen Anordnung des Halteelementes und der stets koaxialen Anordnung der Kupplung gerecht. Mittel's dieses Konzeptes kann der meist ungenutzte Raum in unmittelbarer Wellennähe optimal ausgenutzt werden und es wird kaum zusätzlicher Stauraum erforderlich. Zur Montage wird das Halteelement einfach in axialer Richtung über die Welle geschoben und beispielsweise am Wellengehäuse befestigt.

Es gibt zahlreiche Ausgestaltungsformen und Anwendungen der erfindungsgemäßen Lösung. Einige dieser Ausgestaltungsformen werden nun im Einzelnen abgehandelt.

Vorzugsweise werden zumindest zwei Positionen des Halteelements mittels wenigstens einer elektrischen Stellungsmeldevorrichtung erfasst, um die aktuelle Stellung des Halteelementes überwachen und einer Steuerung melden zu können.

Besonders bevorzugt wird ein ringförmiges Kuppelelement mittels einer vorgespannten Formschlussverbindung oder einer Kraftschlussverbindung oder einer Stoffschlussverbindung oder einer lösbaren Verbindung mit der Welle gekoppelt und weist an seiner Außenseite eine umlaufende und lückenlose Verzahnung auf. Alternativ oder zusätzlich kann es an einer oder beiden Stirnseiten eine Verzahnung aufweisen. Hierdurch lässt sich das Kuppelelement auch bei existierenden Lösungen nachträglich integrieren und einfach montieren.

Alternativ zur vorherigen Methode können das Kuppelelement und die Welle einstückig ausgebildet sein, wodurch sich die Arbeitsschritte bei der Herstellung und Montage neuer Produkte reduzieren lassen, womit sich ebenfalls die Herstellungskosten reduzieren lassen.

Ganz besonders bevorzugt führt das Halteelement eine in Richtung der Wellenachse reversierende Bewegung aus, um zu blockieren oder frei zu geben. Dies fördert die Kompaktheit der Lösung.

Alternativ zu den vorherigen Lösungen umfasst das Halteelement einen radial angeordneten Hebel, welcher drehbar gelagert ist und sich in einer radial und parallel zur Welle aufspannenden Ebene parallel zur Welle bewegen lässt. Auch hier wird der vorhandene Raum optimal ausgenutzt, wobei man die Bewegung des Halteelementes lediglich auf die Bewegung eines oder mehrerer Arme reduziert, was auch eines geringeren Kraftaufwandes bedarf.

Sofern genügend Stauraum vorhanden ist, kann das Halteelement einen radial zur Welle angeordneten und reversierenden Stempel umfassen, welcher eine zur Kupplungsoberfläche korrespondierende Oberfläche aufweist, um die Welle Kraft- oder formschlüssig zu arretieren. Vorteilhaft bei dieser Ausführungsform ist, dass nicht der gesamte Raum um die Welle herum beansprucht wird und ggf. anderweitig genutzt werden kann.

Zweckmäßigerweise wird die Bewegung des Halteelementes mittels eines Permanentmagneten und/oder eines Elektromagneten und/oder einer Feder realisiert. Der Permanent- oder Dauermagnet stellt beispielsweise den ersten Arretierungszustand sicher und die Feder den zweiten Arretierungszustand. Der Elektromagnet wird verwendet, um zwischen den Zuständen zu wechseln. Eine einfache und wartungsarme Möglichkeit, die Freigabe oder Sperre der Welle zu ermöglichen.

Alternativ zu den zuvor genannten Lösungen könnte wenigstens ein Halteelement mit einem Gelenkhebels radial beweglich zur Welle angeordnet sein, wobei der Gelenkhebel mittels der Bewegung eines reversierenden weichmagnetischen und/oder ferromagnetischen Kerns innerhalb eines elektromagnetischen Feldes beweglich angeordnet ist. Diese Lösung bietet sich vor allem dann an, wenn die vorzugsweise koaxiale Anordnung des Halteelementes, zum Beispiel bei der Nachrüstung, nicht möglich ist.

Optimale Sicherheit für ein System bietet die Verbindung der Haltevorrichtung mit einer Betriebsbremse, wobei die erfindungsgemäße Vorrichtung als Haltebremse fungiert. Die Betriebsbremse kann dann zur Abbremsung einer rotierenden Welle verwendet werden, während die Haltebremse nur einrastet, wenn die Drehzahl der Welle bereits durch die Betriebsbremse wesentlich reduziert ist und eine schwere Last zu halten ist.

Besonders vorteilhaft für eine kompakte Realisierung wird die Haltevorrichtung vom gleichen Gehäuse umfasst, welches die Welle umfasst. Beispielsweise von einem Motorgehäuse oder von einem am Motorgehäuse angebrachten separaten Gehäuse.

Eine außerordentlich vorteilhafte Ausgestaltung der Erfindung verwendet ein Vorspannelement, vorzugsweise einer Feder, die so angeordnet ist, dass die Haltevorrichtung bei Stromausfall selbsthaltend ist.

Zur Verbesserung der Stabilität umfasst das Kuppelelement eine Geradverzahnung oder eine Schrägverzahnung, wobei das Flankenprofil der Verzahnung unter anderem dem einer Zykloidenverzahnung, Triebstockverzahnung oder Evolventenverzahnung mit symmetrischem oder asymmetrischem Zahnquerschnitt entspricht.

Die Vorteile der Erfindung kommen besonders dann zum tragen, wenn die Haltevorrichtung in einer der zuvor genannten Ausführungsformen in einer elektrisch gesteuerten Maschine mit beweglicher Achse Verwendung findet, denn häufig fordern solche Maschinen (Werkzeugmaschine, Spritzgießmaschine, Teile von Fertigungsstraßen) kompakte Bauweisen und sichere Betriebsmodi.

Bei Verwendung für einen Motor, insbesondere Asynchron oder Synchronmotoren, kann eine Haltevorrichtung nach einer der zuvor genannten Ausführungsformen vorteilhaft als Haltebremse eingesetzt werden.

Vorzugsweise ist die Haltevorrichtung an eine Steuerung angebunden, welche eine mit der Haltevorrichtung ausgestattete Achse ansteuert und die Arretierungsposition mittels eines Betriebsprogramms auswertet. Diese Funktion könnte auch schon in einem mit oder ohne Steuerung betriebenen Antriebsregler integriert sein. Beide Konzepte werden den Anforderungen an moderne Automatisierungssysteme gerecht, wobei die zuletzt genannte Ausgestaltungsform einen positiven Beitrag zur Modularität des Systems liefert.

Die Sicherung einer Welle unter Verwendung der erfmdungsgemäßen Vorrichtung wird ungeachtet der Reihenfolge mittels folgender Verfahrensschritte durchgeführt:
a) Erfassen der Wellendrehzahl,
b) Abbremsung des Wellenantriebs,
c) Arretieren der Welle bei Unterschreiten einer Drehzahlschwelle,
d) Erfassen der Position der Arretierung.

Das Erfassen der Wellendrehzahl ist erforderlich, um eine Rückmeldung bezüglich der am Umfang der Welle auftretenden Kräfte zu erhalten, die Abbremsphase des Wellenantriebs einzuleiten und den richtigen Moment zur Arretierung zu erkennen. Sobald die Drehzahl der Welle ausreichend klein bzw. optimalerweise Null ist, greift die Arretierung und fixiert die Welle. Die Drehzahlschwelle sollte so gewählt werden, dass eine Beschädigung des Halteelementes oder der Kupplung ausgeschlossen und der Verschleiß bei Zugriff minimal ist. Abschließend wird die Momentanposition der Arretierung zur Kontrolle erfasst und ggf. noch korrigiert.

Es wird mit diesem Verfahren vermieden, dass zum Beispiel beim Ausfall der Bremssteuerspannung für eine Welle die Haltevorrichtung nicht automatisch bei hoher Drehzahl ausgelöst wird, sondern erst bei Stillstand der Welle. Dieser Stillstand wird sich bei Ausfall des Antriebs aufgrund der langsam absinkenden Drehzahl der Welle aufgrund der Lagerreibung erst nach einer bestimmten Zeit einstellen.

Weiter wird zum Schutz der Bremse bei einer Störung der zum Zeitpunkt der Störung existierende Arretierungszustand erhalten. Das bedeutet, dass bei Stromausfall des Wellenantriebs eine arretierte Welle arretiert und eine freigegebene Welle freigegeben bleibt. Damit wird vermieden, dass versucht wird eine nach Stromausfall noch in Rotation befindliche Welle sofort mittels der Haltebremse zu arretieren. Dies würde die Verzahnung und damit die Wirkung der Bremse zerstören. Im Gegensatz dazu bleibt eine bereits arretierte Welle auch arretiert, sobald sich herausstellt, dass der Wellenantrieb nicht funktionsfähig ist.

### Bezugszeichenliste

- 1: Welle
- 2: Wellenverzahnung
- 3: Halteverzahnung
- 4: Spule
- 5: Magnet
- 6: Montageplatte
- 7: Feder
- 8: Stellungsmelder
- 9: Halteelement
- 10: Eisenkern
- 11: Verbindung (Welle/Nabe)
- 12: Bremsscheibe mit Träger
- 13: Haltebremse
- 14: Betriebsbremse
- 15: Geradverzahnung
- 16: Schrägverzahnung
- 17: Motordrehzahl
- 18: Antriebsstatus
- 19: Schutzgitteranforderung
- 20: Bremsenstatus
- 21: Schutzgitterfreigabe

Die folgende Beschreibung erläutert verschiedene Ausgestaltungsformen der Erfindung.
Es zeigen:
Figur 1: Eine axial verschiebbare Haltevorrichtung mit Außenverzahnung.
Figur 2: Eine Haltevorrichtung mit radialen Schwenkarmen.
Figur 3: Eine Haltevorrichtung mit radialen Stempeln.
Figur 3a: Eine Halteverzahnung im Detail
Figur 4: Eine Haltevorrichtung mit Gelenkarm
Figur 4a: Eine Halteverzahnung im Detail
Figur 5: Eine axial verschiebbare Haltevorrichtung mit Stirnverzahnung.
Figur 6: Mögliche Realisierungsformen der Zähne.
Figur 7: Eine Kombination aus Betriebs- und Haltebremse.
Figur 8: Statusinformationen und zeitlicher Ablauf eines Haltevorganges

Alle Zeichnungen sind schematischer Natur und sollen lediglich das erfindungsgemäße Prinzip sowie die Vielzahl der möglichen Ausgestaltungsformen aufzeigen.

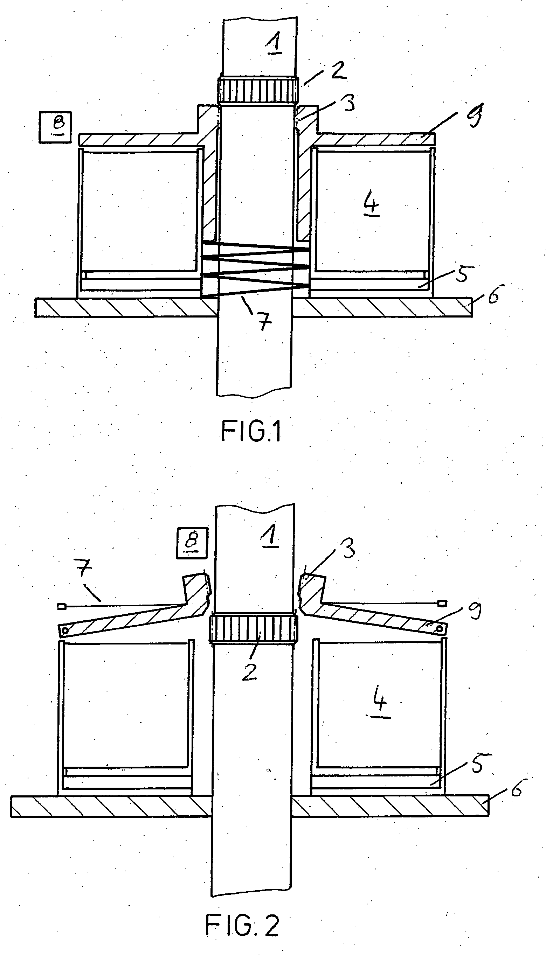

Figur 1 zeigt eine Welle 1 mit Wellenverzahnung 2 auf einem an der Welle angeordneten Ringelement, ein Halteelement 9 mit Halteverzahnung 3, eine Spule 4, einen Dauermagneten 5, eine Montageplatte 6, eine Feder 7 und einen Positionssensor 8. Das Halteelement 9 ist koaxial zur Welle 9 angeordnet und üblicherweise mit einem Gehäuse (nicht gezeigt) fest verbunden. Die an der Montageplatte 6 anliegende Feder 7 übt einen Druck auf das axial zur Welle 1 bewegliche Teil des Halteelementes 9 aus, so dass die vorteilhafterweise ringförmig um die Welle 1 angeordnete Halteverzahnung 3 in die Wellenverzahnung 2 eingreift und eine formschlüssige, steife Verbindung zwischen Halteelement 9 und Welle 1 gewährleistet. Aufgrund der Verbindung des Halteelementes 9 mit dem Gehäuse ist es daher möglich, die Welle 1 in ihrer Drehung zu blockieren. Diese Blockierung hält solange an, wie keine Kraft in entgegengesetzter axialer Richtung auftritt, die Stärker als die Federkraft ist. Eine derartige Kraftwirkung kann mittels der Spule 4 erreicht werden. Eine Kompensation der Federkraft erfolgt dann, wenn die Anziehungskraft des magnetischen Feldes der Spule 4 größer ist als die Federkraft selbst. Die Spule 4 hat damit die Wirkung eines Schalters und bewirkt je nach Bestromung einen Wechsel zwischen dem Wellenzustand "frei" und "arretiert".

Optional kann die Position des Halteelementes 9 mittels eines Positionssensors 8 erfasst werden und eine Meldungen generiert werden, welche die entsprechenden Stellungen an übergeordnete Prozesse melden. Der Positionssensor kann sowohl kontaktbehaftet als auch berührungslos arbeiten.

Für die Figur 2 gilt im Wesentlichen das zur Figur 1 gesagte, wobei hier jedoch ein, oder mehrere am. Umfang verteilte, Hebel mit Verzahnung in eine entsprechende Verzahnung formschlüssig auf der Welle eingreifen. Das Halteelement ist in diesem Falle nicht wie in Figur 1 dargestellt mit einer ringförmigen Verzahnung starr ausgeführt, sondern weist bewegliche Komponenten mit einer Verzahnung auf, wobei die beweglichen Komponenten eine Arretierung bewirken können und mittels einer Feder 7 vorgespannt sind.

Der Zustand "arretiert" wird über den Dauermagneten 4 sichergestellt, indem die Hebel des Halteelementes 9 mittels des Magnetfeldes in Richtung des Magneten geführt werden. Der Zustand "frei" wird über die Feder realisiert. Das durch die Spule 4 erzeugte Feld dient auch hier zum Wechsle zwischen diesen beiden Zuständen.

Ebenfalls ist auch hier eine berührungslose oder kontaktbehaftete Positionserfassung für die Position des Halteelementes 9 integrierbar.

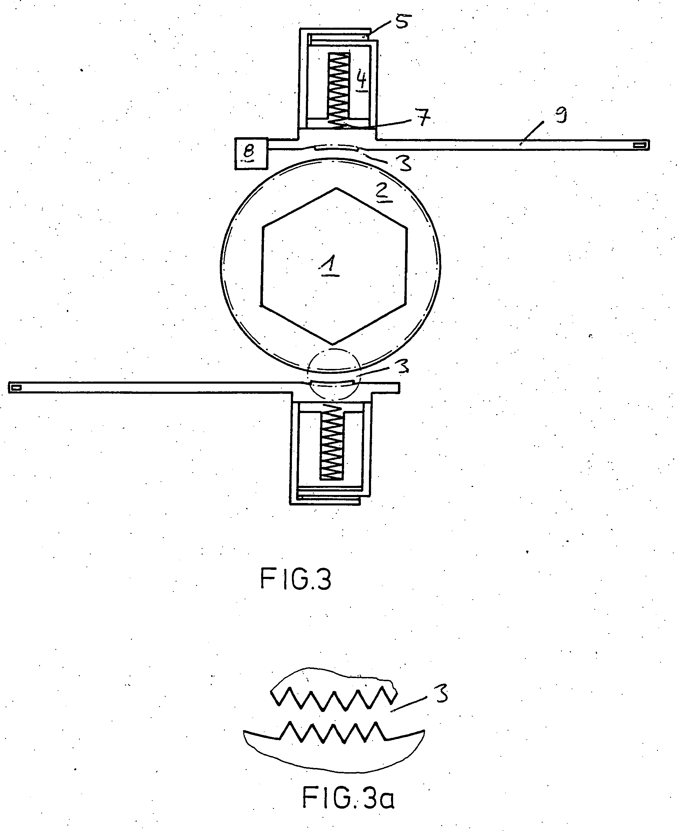

Die Figur 3 zeigt eine weitere Alternative zur Umsetzung der erfindungsgemäßen Lösung. Ein, oder mehrere am Umfang verteilte, Hebel 9 mit Verzahnung 3 greifen in eine korrespondierende Verzahnung 2 auf der Welle 1 ein und stellen auf diese Weise einen Formschluss zwischen Welle 1 und Hebel 9 her. Der Zustand "frei" wird über einen Dauermagneten 5 sichergestellt. Der Zustand "arretiert" wird über die Feder 7 realisiert. Die Spule 4 dient dazu zwischen den beiden Zuständen zu wechseln. Bei dieser Lösung ist jedoch für jeden Hebel eine Kombination aus Spule/Feder und Permanentmagnet erforderlich, welche parallel anzusteuern sind, wohingegen die in Figur 1 bis 2 gezeigten Lösungen die Verwendung von ringförmigen Bauteilen zulässt und somit nur eine einzige Ansteuerung erforderlich ist. Optional ist auch bei der Lösung gemäß Figur 3 die Erfassung der Position der Hebel 9 möglich. Figur 3a zeigt ein Detail bezüglich der möglichen Realisierung einer formschlüssig ineinandergreifenden Wellen- und Halteverzahnung.

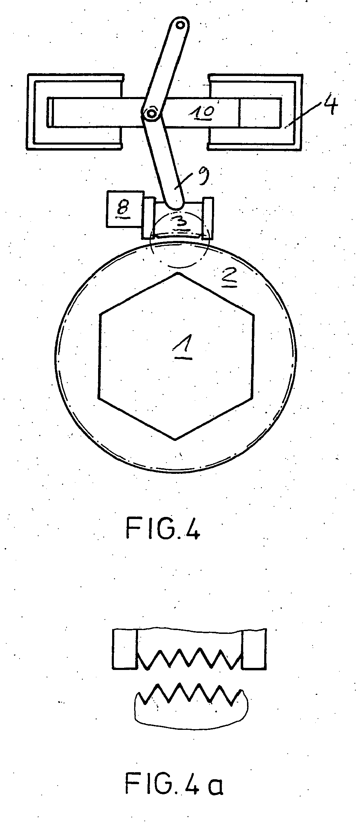

Figur 4 zeigt eine Lösung, welche einen Gelenkhebel 9 als Halteglied nutzt. Der Kopf des Gelenkhebels ist mit einer Verzahnung ausgestattet, welche in die Wellenverzahnung formschlüssig eingreift. Im Zustand "frei" ist das Gelenk abgeknickt und im Zustand "arretiert" ist das Gelenk durchgestreckt. Die Spule 4 dient dazu zwischen beiden Zuständen zu wechseln. Der Positionssensor 8 erfasst die Lage des Gelenkhebelkopfes 9 im Raum und meldet diese ggf. an eine übergeordnete Steuerung oder an einen Antriebsregler. Hier im Beispiel ist nur ein einziger Gelenkhebel gezeigt. Es ist selbstverständlich möglich und je nach erforderlichem Kraftaufwand auch empfehlenswert, mehrere Gelenkhebel am Umfang der Welle angreifen zu lassen, so dass sich die Kräfte überlagern. Um das Wellenlager nicht einseitig zu belasten sollten die Gelenkhebel 9 durch möglichst koaxial und gleichmäßig über den Wellenumfang verteilt sein, so dass sich die einseitigen Kraftwirkungen auf das Lager gegenseitig aufheben. Auch hier kann eine wie in Figur 4. gezeigte Geradverzahnung zur Herstellung einer Formschlussverbindung eingesetzt werden.

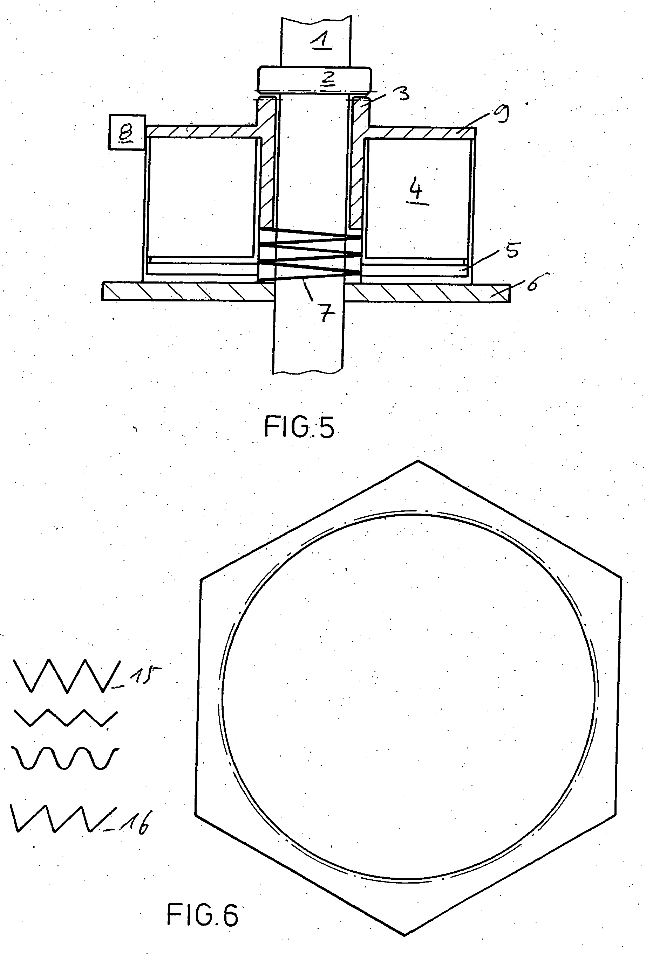

Für die Ausführung der Erfindung gemäß Figur 5 gilt das bereits für Figur 1 gesagte mit der Ausnahme, dass die Verzahnung 2 am Wellenring nicht an dessen Außenmantel, sondern an dessen dem Halteelement zugewandten Stirnseite angeordnet ist. Dementsprechend weist das Halteelement 9 keine Halteverzahnung 3 an seiner koaxial zur Welle 1 angeordneten Innenseite auf, sondern ebenfalls an einer koaxial um die Welle 1 angeordneten Stirnseite. Die Funktionsweise bezüglich der Arretierung und Freigabe der Welle ist identisch zur Realisierung gemäß der Figur 1.

Figur 6 soll zeigen, dass eine Vielzahl von Verzahnungen möglich ist, um die Eigenschaften der formschlüssigen Verbidnung zwischen Welle 1 und Halteelement 9 zu beeinflussen. Es bietet sich an eine Geradverzahnung oder Schrägverzahnung sowie Flankenprofile entsprechend einer Zykloidenverzahnung, Triebstockverzahnung oder Evolventenverzahnung mit symmetrischem oder asymmetrischem Zahnquerschnitt zu verwenden. Weitere Verzahnungsarten sind denkbar. Generell sind alle möglichen Realisierungsformen von zueinander korrespondierenden Vorsprüngen und Ausnehmungen geeignet.

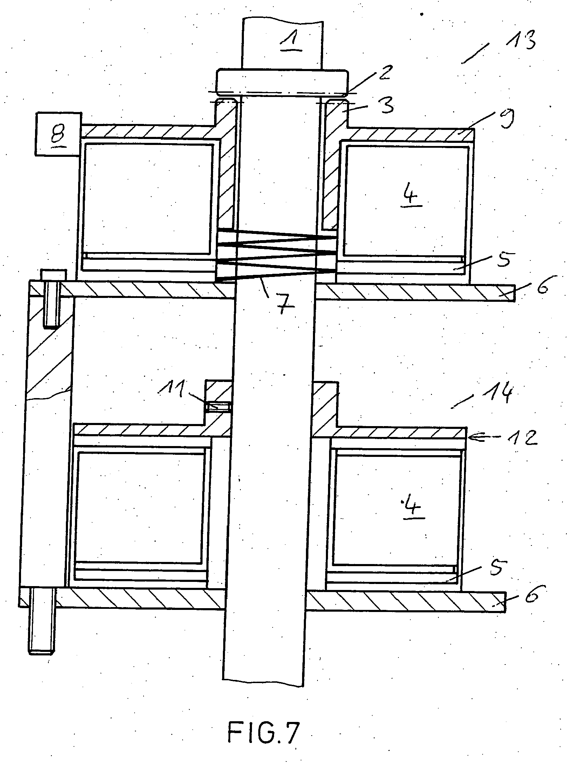

Figur 7 zeigt die in Figur 5 geschilderte Haltevorrichtung als Haltebremse 13, welche in Verbindung mit einer Betriebsbremse 14 koaxial zu einer Welle 1 angeordnet ist. Beide Bremsen sind mittels des Verbindungselementes 17 miteinander fest gekoppelt und vorzugsweise wieder mit dem Gehäuse verbunden, welches die Welle 1 umfasst. Die Betreibsbremse arbeitet mittels auf einem Träger 12 angeordneten Bremsschreibe. Ein Teil der Betriebsbremse 14 ist mittels einer Nabe 11 mit der Welle 1 verbunden. Diese Kombination erfordert einen nur sehr kleinen Stauraum und ermöglicht die Realisierung einer Abbremsvorrichtung für eine Welle durch Verminderung der Drehzahl und mit anschließender Sicherung der Welle beispielsweise zum Schutze von Personen unter hängenden schweren Lasten.

Die Haltevorrichtung, welche die Achsarretierung herstellt, kann mit weiteren z.B. auf Basis einer Reibpaarung arbeiteten Haltebremsen eine Montageeinheit bilden.

Die gezeigten Halte- und/oder Betriebsbremsenkombinationen können auch separat und außerhalb des Antriebsmotors angeordnet sein oder in einem eigenen Gehäuse an die Maschine angebaut sein.

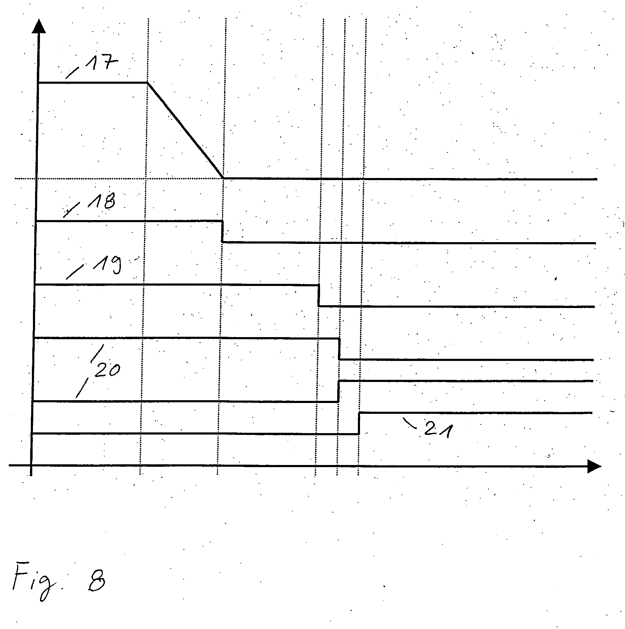

Figur 8 zeigt den zeitlichen Verlauf charakteristischer Signale zur Sicherung einer Welle 1 mittels der Haltevorrichtung 13. Signal 17 zeigt den Verlauf der Motordrehzahl, der rampenförmig abnimmt, bis letztlich Stillstand herrscht. Das Signal 18 informiert über den Antriebsstatus. Wenn die Drehzahl ungleich Null ist liefert der Signalpegel einen High-Zustand und in allen anderen Fällen einen Low-Zustand. Das Signal 19 informiert darüber, ob das Schutzgitter ausgefahren (High) oder eingefahren (Low) ist. Die Signale 20 melden den Zustand der Haltevorrichtung, d.h. ob sie geben darüber Aufschluß, ob diese offen oder geschlossen ist. Signal 21 letztlich informiert über die Freigabe oder die Sperrung des Schutzgitters. An den Flanken der Signale sind gewisse Verzögerungszeiten erkennbar, welche u.a. durch Signallaufzeiten bedingt sind.

Zur Ansteuerung der erfindungsgemäßen Haltevorrichtung (Bremse), welche die Achsarretierung herstellt, wird zunächst das Signal 18 ausgewertet, denn dieses zeigt an, sobald die Motordrehzahl Null ist.

Erst nach geeignetem Status von Antrieb (Signal 18) und Schutzgitter (Signal 19) oder einem vergleichbaren "Not-Aus" Signal darf die Haltevorrichtung aktiviert werden. Im konkreten Fall heißt dies, erst wenn die Drehzahl des Antriebs Null ist und das Schutzgitter ausgefahren ist, darf die Haltevorrichtung die Welle arretieren. Andernfalls könnten aufgrund der formschlüssigen Verzahnung zwischen Welle und Haltevorrichtung enorme Kräfte auftreten, welche zur Zerstörung der Verzahnung und fehlerhaften Arretierung der Last fuhren.

Die aus Figur 7 bekannte Reibungsbremse 14 bzw. Betriebsbremse 14 die im Verbund mit der Haltevorrichtung 13 arbeiten kann, unterliegt derartigen Einschränkungen nicht, sie kann daher zu jederzeit aktiviert bzw. deaktiviert werden, um beispielsweise die Drehzahl der Welle bis auf Null abzubremsen.

Sobald die Haltevorrichtung aktiviert ist und die Welle blockiert erfolgt eine einsprechende Rückmeldung (Signal 20) und erst nachdem diese Rückmeldung erfolgte, darf der Arbeitsraum betreten und das Schutzgitter freigegeben werden. Mittels geeigneter logischer Verknüpfung der Signale sind dem Fachmann weitere Auswertemechanismen zugänglich.

## Patentansprüche

1. Haltevorrichtung umfassend ein elektrisch gesteuertes Halteelement (9) und eine Welle (1) mit Kupplung (2), die mit dem Halteelement (9) interagiert, **dadurch gekennzeichnet, dass**
- das Halteelement (9) vorzugsweise koaxial zur Welle (1) angeordnet ist,
- die Kupplung (2) koaxial zur Welle angeordnet ist,
- das Halteelement (9) zumindest zwei Positionen einnehmen kann, wobei eine Position die Welle (1) freigibt und eine Position die Welle (1) arretiert,
- das Halteelement (9) und die Kuppelung (2) eine korrespondierende Oberflächenstruktur umfasst.

2. Haltevorrichtung nach Anspruch 1, **dadurch gekennzeichnet, dass** zumindest zwei Positionen des Halteelements (9) mittels wenigstens einer elektrischen Stellungsmeldevorrichtung (8) erfasst sind.

3. Haltevorrichtung nach einem der vorhergehenden Ansprüche, **dadurch gekennzeichnet, dass** das Kuppelelement (2) mittels einer vorgespannten Formschlussverbindung oder einer Krafischlussverbindung oder einer Stoffschlussverbindung oder einer lösbaren Verbindung mit der Welle (1) verbundenen ist und eine Außenmantel- und/oder Stimseitenverzahnung aufweist.

4. Haltevorrichtung nach einem der Ansprüche 1 oder 2, **dadurch gekennzeichnet, dass** das Kuppelelement (2) und die Welle (1) einstückig ausgebildet sind.

5. Haltevorrichtung nach einem der vorhergehenden Ansprüche, **dadurch gekennzeichnet, dass** das Halteelement (9) eine in Richtung der Wellenachse reversierende Bewegung ausführt.

6. Haltevorrichtung nach einem der Ansprüche 1 bis 4, **dadurch gekennzeichnet, dass** das Halteelement (9) einen radial angeordneten Hebel umfasst.

7. Haltevorrichtung nach einem der Ansprüche 1 bis 4, **dadurch gekennzeichnet, dass** das Halteelement (9) radial zur Welle (1) angeordnet ist und wenigstens einen radial und reversierend beweglichen Stempel umfasst.

8. Haltevorrichtung nach einem der vorhergehenden Ansprüche, **dadurch gekennzeichnet, dass** die Bewegung des Halteelementes mittels eines Permanentmagneten und/oder eines Elektromagneten und/oder einer Feder realisiert ist.

9. Haltevorrichtung nach einem der Ansprüche 1 bis 4, **dadurch gekennzeichnet, dass** wenigstens ein Halteelement (9) mit einem Gelenkhebels radial beweglich zur Welle angeordnet ist und der Gelenkhebel angetrieben ist mittels der reversierenden Bewegung eines weichmagnetischen und/oder ferromagnetischen Kerns (10) innerhalb eines elektromagnetischen Feldes.

10. Haltevorrichtung nach einem der vorhergehenden Ansprüche, **dadurch gekennzeichnet, dass** diese als Haltebremse (13) zusammen mit einer Betriebsbremse (14) an der Welle (1) angeordnet ist.

11. Haltevorrichtung nach einem der vorhergehenden Ansprüche, **dadurch gekennzeichnet, dass** diese von dem gleichen Gehäuse umfasst ist, welches auch die Welle (1) umfasst.

12. Haltevorrichtung nach einem der vorhergehenden Ansprüche, **dadurch gekennzeichnet, dass** diese unter Verwendung eines Vorspannelementes, vorzugsweise einer Feder (7), bei Stromausfall selbsthaltend ist.

13. Haltevorrichtung nach einem der vorhergehenden Ansprüche, **dadurch gekennzeichnet, dass** das Kuppelelement (2) eine Geradverzahnung (15) oder Schrägverzahnung (16) umfasst, wobei das Flankenprofil der Verzahnung unter anderem dem einer Zykloidenverzahnung, Triebstockverzahnung oder Evolventenverzahnung mit symmetrischem oder asymmetrischem Zahnquerschnitt entspricht.

14. Elektrisch gesteuerte Maschine mit beweglicher Achse, **dadurch gekennzeichnet, dass** das die Achse mit einer Haltevorrichtung nach einem der Ansprüche 1 bis 13 arretierbar ist.

15. Motor, insbesondere Asynchron oder Synchronmotoren, **dadurch gekennzeichnet, dass** dieser eine Haltevorrichtung nach einem der Ansprüche 1 bis 13 umfasst.

16. Steuerung, **dadurch gekennzeichnet, dass** diese eine Achse mit einer Haltevorrichtung nach einem der Ansprüche 1 bis 13 ansteuert und die Arretierungsposition auswertet.

17. Antriebsregler, **dadurch gekennzeichnet, dass** dieser eine Motorachse mit einer Haltevorrichtung nach einem der Ansprüche 1 bis 13 ansteuert und die Arretierungsposition auswertet.

18. Verfahren zur Sicherung einer Welle (1), **dadurch gekennzeichnet, dass**
- eine Vorrichtung nach einem der Ansprüche 1 bis 17 verwendet wird,
- ungeachtet der Reihenfolge folgende Schritte durchgeführt werden:
a) Erfassen der Wellendrehzahl,
b) Abbremsung des Wellenantriebs,
c) Arretieren der Welle bei Unterschreiten einer Drehzahlschwelle,
d) Erfassen der Position der Arretierung.

19. Verfahren nach Anspruch 18, **dadurch gekennzeichnet, dass** bei einer Störung der zum Zeitpunkt der Störung existierende Arretierungszustand erhalten bleibt.

20. Verfahren nach Anspruch 19, **dadurch gekennzeichnet, dass** bei Stromausfall eine arretierte Welle arretiert und eine freigegebene Welle freigegeben bleibt.
